# EUROPÄISCHE PATENTSCHRIFT

(11) **EP 1 028 890 B1**
(45) Veröffentlichungstag und Bekanntmachung des Hinweises auf die Patenterteilung: **17.11.2004**
(21) Anmeldenummer: 99953686.5
(22) Anmeldetag: 02.09.1999
(51) Int. Cl.: B64C 13/16, G05D 1/04

(54) **VERFAHREN ZUM KOMPENSIEREN VON STRUKTURSCHWINGUNGEN EINES FLUGZEUGS AUFGRUND VON ÄUSSEREN STÖRUNGEN**
METHOD FOR COMPENSATING STRUCTURAL VIBRATIONS IN AN AIRPLANE THAT ARE DUE TO EXTERNAL DISTURBANCES
PROCEDE POUR COMPENSER DES VIBRATIONS DE STRUCTURE D'UN AERONEF DUES A DES PERTURBATIONS EXTERIEURES

(30) Priorität: 11.09.1998 DE 19841632
(43) Veröffentlichungstag der Anmeldung: 23.08.2000
(73) Patentinhaber: EADS Deutschland GmbH, 85521 Ottobrunn (DE)
(72) Erfinder: BECKER, Jürgen, D-81479 München (DE)
(86) Internationale Anmeldenummer: PCT/DE1999/002773
(87) Internationale Veröffentlichungsnummer: WO 2000/015498

(56) Entgegenhaltungen:
- US-A- 3 734 432
- US-A- 4 706 902
- US-A- 5 072 893
- US-A- 5 186 416

## Beschreibung

Die Erfindung betrifft ein Verfahren zum Kompensieren von Strukturschwingungen eines Flugzeugs aufgrund von äußeren Störungen, insbesondere von Böen, Turbulenzen und Buffeting, wobei das Flugzeug insbesondere ein bemannter Starrflügler, ein Flugkörper oder ein Hubschrauber sein kann, sowie eine Vorrichtung zur Durchführung dieses Verfahrens.

Ein Gesichtspunkt der Erfindung ist das sogen. Buffeting oder "Schütteln", d.h. die Antwort des Flugzeug-Verhaltens aufgrund abgelöster Strömung ("buffet") und Wirbelplatzen im hohen Anstellwinkelbereich. Die dynamischen Belastungen aus dem Vorgang abgelöster Strömung sind hoch und führen zu Auslegungs-Kriterien für die Flügel und das Leitwerk von Flugzeugen, insbesondere bei bemannten Kampfflugzeugen. Ein Abschwächen der Auswirkung dieser Störungen ist also bei der Auslegung von Flugzeugen und bei der Erhöhung und Kontrolle der Belastungsgrenzen von Flugzeugen von großer Bedeutung.

Das Verhalten eines fliegenden Flugzeugs in einer turbulenten Atmosphäre sollte so ruhig wie möglich sein, aber mindestens im Rahmen bekannter Vorschriften liegen. Dies gilt insbesondere für Passagiermaschinen, für die es spezielle Anforderungen hinsichtlich des Passagier-Komforts, auch "Ride Comfort" genannt, gibt. Dabei wirken äußere Störungen, insbesondere Böen und Turbulenzen, direkt auf Strukturteile des Flugzeugs, die dadurch zu Schwingungen aufgrund der Eigenformen der Struktur und zu Vibrationen angeregt werden. Aufgrund dieser Wirkung wird das Flugverhalten und insbe-sondere der Passagier- und Piloten-Komfort, ungünstig beeinflußt und die Struktur des Flugzeugs belastet.

Bisher wurden für Reduktionen der Auswirkungen solcher äußerer atmosphärisscher Störungen auf das Flugzeug Sensoreinrichtungen, insbesondere Beschleunigungsaufnehmer an verschiedenen Orten des Flugzeuges angeordnet. Vorzugsweise wurden Beschleunigungsaufnehmer an den Flügelspitzen, an Orten des Rumpfes und an den Spitzen des Höhen- und Seitenleitwerkes angeordnet. Deren Signale wurden nach einer Signalaufbereitung im Regler verarbeitet und bei der Ermittlung der Stellgrößen für die Stellantriebe der Ruderflächen berücksichtigt. Derartige Systeme sind beispielsweise beschrieben in "Procedings on the 26^{th} Aircraft Symposium", Sendai, Japan, 19. - 21. Oktober, "Japan Publications Trading Company", Tokyo, 1988, Seiten 160 -163 oder in "DGLR Paper" 084 - 094 der Deutschen Gesellschaft für Luft- und Raumfahrt, Jahrestagung, 1. - 03.10.1984, Hamburg.

Ein Nachteil dieser Sensoreinrichtungen bzw. -Systeme ist, daß der meßtechnische Aufwand und auch der Aufwand für die Regel- und Stelleinrichtungen sehr hoch ist. Insbesondere bei geregelten Flugzeugen wird der Aufwand noch dadurch erhöht, daß für den Fall eines Fehlers in derartigen Sensoreinrichtungen entsprechende Fehlererkennungs- und Systemrekonfigurations Funktionen vorgesehen werden müssen, um solche Fehler zumindest in ihrer Wirkung zu begrenzen oder auch zu kompensieren.

Weiterhin sind aus der US 4,905,934, der US 5,072,893, der US 5,186,416 und der US 4,725,020 Verfahren bzw. Systeme zur Kompensation von Störungen auf Flugzeugstrukturen bekannt, die die Strukturbelastungen aufgrund dieser Störungen reduzieren sollen. Dabei werden Beschleunigungssignale bzw. diese in Kombination mit Spannungswerten und Anstellwinkeln verwendet, um die Steuerflächen des Flugzeugs so zu bewegen, daß die Lastverteilung in der Struktur verringert wird. Höherfrequente Schwingungsformen und Strukturkopplungen werden dabei jedoch nicht kompensiert. Phasenverzüge, die insbesondere bei höherfrequenten Schwingungen eine große Rolle spielen, werden nicht berücksichtigt, so daß sich die Verfahren nach dem Stand der Technik nur für sehr geringe Frequenzen eignet.

Es ist daher die Aufgabe der Erfindung, ein Verfahren bzw. eine Vorrichtung zum Kompensieren von Strukturschwingungen eines Flugzeugs aufgrund von Böen und Buffeting zu schaffen, das sich auch zur Kompensation höherfrequenter Schwingungen eignet.

Diese Aufgabe wird durch die Merkmale der Ansprüche 1 und 4 gelöst. Weitere Ausführungsformen sind in den Unteransprüchen angegeben.

Bei dem erfindungsgmäßen Verfahren bzw. der erfindungsgemäßen Vorrichtung ist der gerätetechnische Aufwand äußerst gering und besteht je nach dem zu betrachtenden Flugregelsystem lediglich in einer Bereitstellung zusätzlicher Verbindungen zwischen der Interial- oder Trägheitssensorik für das Flugregelsystem und den eigentlichen Flugregelsystemen. Hinzu kommt ein funktionaler Aufwand zur phasengerechten Verarbeitung der zur Dämpfung des Flugverhaltens von der Trägheitssensorik zurückgeführten Größen. Dieser Aufwand ist jedoch bei den Verfahren nach dem Stand der Technik sehr viel höher, da dort Einrichtungen geschaffen werden müssen, um die Signale der Beschleunigungssensoren phasengerecht aufzubereiten und zu überwachen. Wird davon ausgegangen, daß eine Trägheitssensorik und ein Flugregelsystem bereits an Bord des betrachteten Flugzeugs ist, so ist das Flugregelsystem lediglich funktional an die Rückführung zusätzlicher Größen aus der Trägheitssensorik zum Zwecke der Dämpfung des Flugverhaltens anzupassen.

Es hat sich überraschenderweise herausgestellt, daß im wesentlichen allein mit den Ausgangssignalen einer für ein Flugregelsystem geeigneten Trägheitssensorik die Auswirkungen von atmosphärischen Störungen auf das fliegende Flugzeug erfaßt und durch entsprechende Zuführung und Verarbeitung dieser Größen im Flugregelsystem gedämpft werden können.

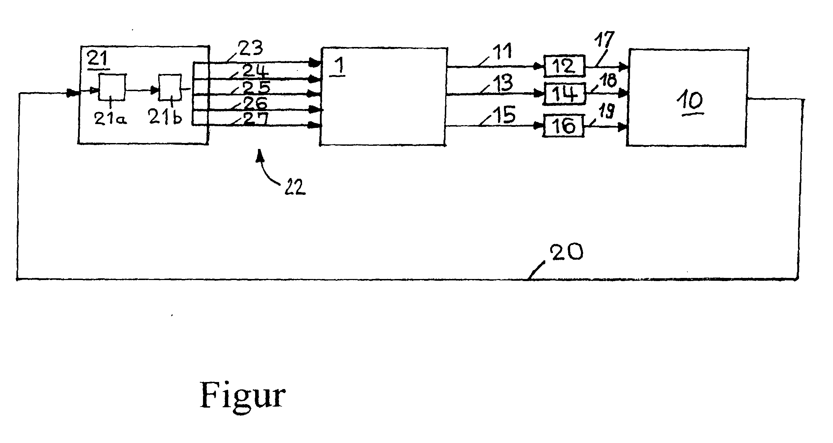

Die Erfindung wird im folgenden anhand der Figur beschrieben, die ein Blockschaltbild eines geschlossenen Regelkreises mit einem Flugregelsystem, Stellantrieben und einer Trägheitssensorik darstellt.

Die Figur zeigt ein elektronisches Flugregelsystem 1, daß über zumindest eine Datenverbindung 11 mit einem oder mehreren Stellantrieben 12 für die Höhenruder, mit einer Datenverbindung 13 mit den Stellantrieben 14 für die Querruder und mit einer Datenverbindung 15 mit Seitenruder-Stellantrieben 16 verbunden ist. Jede Datenverbindung 11, 13, 15 kann wieder mehrere elektrische analoge oder digitale Leitungen umfassen. Die Stellantriebe 12, 14, 16 bestimmen das Flugzeugverhalten 10. Diese Wirkung der Stellantriebe ist symbolisch durch die Verbindungslinien 17, 18, 19 dargestellt. Das Flugzeugverhalten 10 wird mittels einer dem elektronischen Flugregelsystem 1 zugeordneten Trägheitssensorik erfaßt, was symbolisch mit der Verbindungslinie 20 dargestellt ist. Die Trägheitssensorik 21 wiederum ist über analoge Signalleitungen oder digitale Datenverbindungen 22 mit dem elektronischen Flugregelsystem 1 verbunden. In der vorliegenden Zeichnung sind als Signal- bzw. Datenverbindungen 22 nur die Verbindung für die Vertikalbeschleunigung 23, die Nickrate 24, die Seitenbeschleunigung 25, die Rollrate 26 und die Gierrate 27 dargestellt, wobei für die Erfindung lediglich die Drehraten wesentlich sind.

Diese Größen werden mittels der Trägheitssensorik 21 ermittelt und dort oder im elektronischen Flugregelsystem konsolidiert, d.h. bei Vorliegen von Daten mehrerer Sensoren und zum Teil anderer Sensoren abgeglichen. Sowohl die Trägheitssensoren 21 wie auch das elektronische Flugregelsystem 1 weisen vorzugsweise mehrere redundante und zwar similare oder dissimilare Bestandteile auf, die gegenseitig wiederum im Austausch stehen, um das Auftreten von Fehlern zu erkennen, zu identifizieren und geeignete Rekonfigurationsfunktionsmechanismen zur Aufrechterhaltung der gesamten Flugsteuerungsfunktionen zu gewährleisten. Dabei können die Funktionen 21b der Trägheitssensorik 21, die den eigentlichen Trägheitssensor-Komponenten 21 a funktional nachgeschaltet sind, mit den Funktionen des elektronischen Flugregelsystems 1 in einer Datenverarbeitungseinrichtung funktional integriert sein oder von dieser funktional getrennt und disloziert sein. Die Signal- und Datenverbindungen 22 können daher auch softwaremäßig realisiert sein.

Erfindungsgemäß werden zur Dämpfung, insbesondere der Längsbewegung des Flugzeugs die Nickrate 24 dem Flugregelsystem 1 zugeführt und in diesem nach einer regeltechnischen Verarbeitung in dem Stellsignal für diejenigen Stellantriebe mitberücksichtigt, die je nach Flugzeugkonfiguration für die Beeinflussung der Längsbewegung des Flugzeugs zuständig sind. Bei den meisten Starrflüglern sind dies die Höhenruder-Stellantriebe 12.

Zur Dämpfung des Flugzeugverhaltens, insbesondere bezüglich der Seitenbewegung werden die in der Trägheitssensorik 21 ermittelten Werte für die Rollrate 26 oder die Gierrate 27 oder die Kombination dieser Größen dem elektronischen Flugregelsystem 1 zugeführt. Dort werden diese Größen verarbeitet und zur Dämpfung von Störungen, die Einfluß auf die Seitenbewegung des Flugzeugs haben, bei den Stellsignalen für diejenigen Stellantriebe berücksichtigt, die für die Seitenbewegung des Flugzeugs zuständig sind. Dies geschieht bei den meisten Starrflüglern über entsprechende Leitungen 13, 15 mittels der Querruder-Stellantriebe 14 und der Seitenruder-Stellantriebe 16.

Je nach Art des Flugzeugs sind für jedes an diesem vorgesehene Höhenruder vorzugsweise mehrere Stellantriebe vorgesehen. Dies gilt ebenso für die Querruder, die Seitenruder oder weitere Steuerflächen des Flugzeugs, die je nach Konfiguration des Flugzeugs zusammen mit jeweils einem Stellantrieb an diesem vorhanden sind. In entsprechender Weise und zusätzlich abhängig von dem Sicherheitskonzept des Flugregelsystems 1 sind für jeden Stellantrieb 12, 14, 16 eine oder mehrere Daten- oder Signalverbindungen 11, 13, 15 vorgesehen. Jedem Stellantrieb 12 kann weiterhin noch eine Signal- oder Datenverarbeitung zugeordnet sein, die entweder physisch am Stellantrieb oder entfernt von diesem im Flugzeug vorgesehen ist. Analoges gilt für die Stellantriebe anderer Steuerflächen des Flugzeugs und deren zugehöriger Signal- und Datenverbindungen.

Die von der Trägheitssensorik 21 dem Flugregelsystem 1 zugeführten Daten 23, 24, 25, 26 und/oder 27 werden in dem Flugregelsystem 1 vorzugsweise in Filterstufen (nicht gezeigt) gefiltert, unter anderem um das Anregen von Eigenfrequenzen der Flugzeugstruktur mittels der Stellantriebe 12, 14, 16 zu vermeiden. Zur Regelung des Flugzeugs werden diese, andere Sensordaten und abgespeicherte Daten miteinander regelungstechnisch verarbeitet. In Bezug auf die Dämpfung von atmosphärischen Störungen werden die dafür jeweils über die Leitungen 23, 24, 25, 26 und/oder 27 übertragenen Daten mit den Werten dieser Daten vorausgehender Berechnungszyklen verglichen und aufgrund der daraus ermittelten jeweiligen Phasendifferenzen nach entsprechender Verstärkung Stellsignale über die Leitungen 11, 13, 15 an die Stellantriebe 12, 14, 16 geschickt. Diese bewirken entsprechende Ausschläge der Steuerklappen, die den atmosphärischen Störungen auf das Flugzeug entgegenwirken. Die Dämpfung der auf das Flugzeug wirkenden Störungen wird dann erreicht, wenn die Daten 23, 24, 25, 26 und/oder 27 phasengerecht in dem Flugregelsystem 1 verarbeitet werden. Dann können mittels geeigneter Stellsignale die Auswirkungen von atmosphärischen Störungen auf das Flugzeug in Bezug auf die hochfrequenten Eigenformen der Flugzeugstruktur im Sinne einer Dämpfung reduziert werden.

Das gesamte System von der Trägheitssensorik 21 über das Flugregelsystem 1 und die Stellantriebe 12, 14, 16 muß schnell genug sein, d.h. einen entsprechend geringen Phasenverzug aufweisen, und die Stellantriebe 12, 14, 16 müssen eine entsprechende Leistung und insbesondere Stellgeschwindigkeiten bereitstellen, um eine ausreichend schnelle Bewegung der Steuerklappen des Flugzeugs und eine wirksame und zeitgerechte Dämpfung der Auswirkung von Störungen auf das Flugzeug zu erreichen.

### Bezugszeichenliste

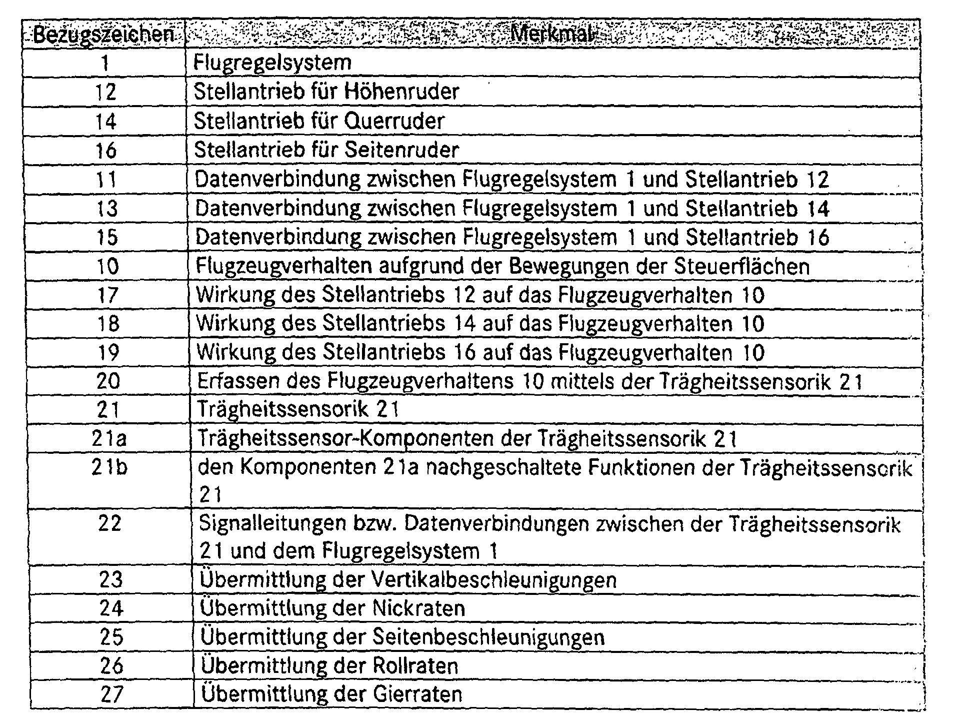

## Patentansprüche

1. Verfahren zum Kompensieren von aufgrund von Böen und Buffeting auftretenden Strukturschwingungen eines fliegenden Flugzeugs mit einem Flugregelsystem (1), Stellantrieben (12, 14, 16) zur Bewegung von Steuerflächen und einer Trägheitssensorik (21), mit den folgenden Schritten:
- messtechnische Erfassung (16) der Strukturschwingungen mittels zumindest einer in der Trägheitssensorik (21) ermittelten Drehrate (24, 26, 27),
- Zuführen der zumindest einen Drehrate (24, 26, 27) dem Flugregelsystem (1),
- Erzeugen von phasen- und amplitudengerechten Steuerklappen-Bewegungen durch Generierung entsprechender Stellsignale (11, 13, 15) an die jeweiligen Stellantriebe (12, 14, 16), um die Phasen und Amplituden der angeregten Schwingungen zu minimieren.

2. Verfahren zum Kompensieren von aufgrund von Böen und Buffeting auftretenden Strukturschwingungen eines Flugzeugs nach dem Anspruch 1, **dadurch gekennzeichnet, dass** die von der Trägheitssensorik (21) ermittelten Gierraten zur Erzeugung der Steuerklappen-Bewegungen verwendet werden.

3. Verfahren zum Kompensieren von aufgrund von Böen und Buffeting auftretenden Strukturschwingungen eines Flugzeugs nach dem Anspruch 1 oder 2, **dadurch gekennzeichnet, dass** die von der Trägheitssensorik (21) ermittelten Nickraten zur Erzeugung der Steuerklappen-Bewegungen verwendet werden.

4. Verfahren zum Kompensieren von aufgrund von Böen und Buffeting auftretenden Strukturschwingungen eines Flugzeugs nach dem Anspruch 1, 2 oder 3, **dadurch gekennzeichnet, dass** die von der Trägheitssensorik (21) ermittelten Rollraten zur Erzeugung der Steuerklappen-Bewegungen verwendet werden.

5. Vorrichtung zum Kompensieren von aufgrund von Böen und Buffeting auftretenden Strukturschwingungen eines fliegenden Flugzeugs
- mit einer Trägheitssensorik (21) zur Ermittlung zumindest einer Drehrate (24, 26, 27) als Messwert (16) für auftretende Strukturschwingungen,
- mit einem mit der Trägheitssensorik (21) funktional in Verbindung stehenden Flugregelsystem (1),
- mit Stellantrieben (12, 14, 16) zur Bewegung von Steuerflächen des Flugzeugs aufgrund der Kommandos des Flugregelsystems (1),
**dadurch gekennzeichnet, dass**
dem Flugregelsystem (1) die zumindest eine Drehrate (24, 26, 27) zugeführt wird, und das Flugregelsystem (1) Funktionen aufweist, durch die aufgrund der Vorrichtung zum Kompensieren von aufgrund von Böen und Buffeting auftretenden Strukturschwingungen eines fliegenden Flugzeugs entsprechende Stellsignale (11, 13, 15) an die jeweiligen Stellantriebe (12, 14, 16) generiert werden, um die Phasen und Amplituden der angeregten Schwingungen durch phasenund amplitudengerechte Steuerklappen-Bewegungen zu minimieren.

6. Vorrichtung zum Kompensieren von aufgrund von Böen und Buffeting auftretenden Strukturschwingungen eines fliegenden Flugzeugs nach dem Anspruch 5, **dadurch gekennzeichnet, dass** für die zumindest eine Drehrate (24, 26, 27) von der Trägheitssensorik (21) ermittelte Gierraten verwendet werden.

7. Vorrichtung zum Kompensieren von aufgrund von Böen und Buffeting auftretenden Strukturschwingungen eines fliegenden Flugzeugs nach dem Anspruch 5 oder 6, **dadurch gekennzeichnet, dass** für die zumindest eine Drehrate (24, 26, 27) von der Trägheitssensorik (21) ermittelte Nickraten verwendet werden.

8. Vorrichtung zum Kompensieren von aufgrund von Böen und Buffeting auftretenden Strukturschwingungen eines fliegenden Flugzeugs nach dem Anspruch 5, 6 oder 7, **dadurch gekennzeichnet, dass** für die zumindest eine Drehrate (24, 26, 27) von der Trägheitssensorik (21) ermittelte Rollraten verwendet werden.

9. Vorrichtung zum Kompensieren von aufgrund von Böen und Buffeting auftretenden Strukturschwingungen eines fliegenden Flugzeugs nach einem der voranstehenden Patentansprüche, **dadurch gekennzeichnet, dass** die Funktionen der Trägheitssensorik (21) mit Funktionen des Flugregelsystems in einer Datenverarbeitungseinrichtung funktional integriert sind.

10. Vorrichtung zum Kompensieren von aufgrund von Böen und Buffeting auftretenden Strukturschwingungen eines fliegenden Flugzeugs nach einem der Patentansprüche 1 bis 8, **dadurch gekennzeichnet, dass** die Funktionen der Trägheitssensorik (21) von den Funktionen des Flugregelsystems in einer Datenverarbeitungseinrichtung disloziert angeordnet sind.

11. Vorrichtung zum Kompensieren von aufgrund von Böen und Buffeting auftretenden Strukturschwingungen eines fliegenden Flugzeugs nach einem der voranstehenden Patentansprüche, **dadurch gekennzeichnet, dass** das Flugregelsystem (1) und/oder die Trägheitssensorik (21) mehrere redundante Bestandteile aufweist bzw. aufweisen, die gegenseitig wiederum im Austausch stehen, um das Auftreten von Fehlern zu erkennen, zu identifizieren und geeignete Rekonfigurations-Maßnahmen zu Aufrechterhaltung der gesamten Flugsteuerungsfunktionen zu gewährleisten.

12. Vorrichtung zum Kompensieren von aufgrund von Böen und Buffeting auftretenden Strukturschwingungen eines fliegenden Flugzeugs nach einem der voranstehenden Patentansprüche, **dadurch gekennzeichnet, dass** das Flugregelsystem (1) und/oder die Trägheitssensorik (21) similare redundante Bestandteile aufweist bzw. aufweisen.

13. Vorrichtung zum Kompensieren von aufgrund von Böen und Buffeting auftretenden Strukturschwingungen eines fliegenden Flugzeugs nach einem der voranstehenden Patentansprüche, **dadurch gekennzeichnet, dass** das Flugregelsystem (1) und/oder die Trägheitssensorik (21) dissimilare redundante Bestandteile aufweist bzw. aufweisen.

## Claims

1. Method of compensating for structural vibrations of a flying aircraft occurring as a result of squalls and buffeting using a flight control system (1), actuators (12, 14, 16) for moving control surfaces and an inertial sensor system (21), comprising the following steps:
- metrological detection (16) of the structural vibrations by means of at least one rotation rate (24, 26, 27) determined in the inertial sensor system (21),
- routing of the at least one rotation rate (24, 26, 27) to the flight control system (1),
- generation of phase-related and amplitude-related control flap movements by generating corresponding actuating signals (11, 13, 15) for the respective actuators (12, 14, 16) in order to minimize the phases and amplitudes of the vibrations excited.

2. Method of compensating for structural vibrations of an aircraft occurring as a result of squalls and buffeting according to claim 1, **characterized in that** the yaw rates determined by the inertial sensor system (21) are used to generate control flap movements.

3. Method of compensating for structural vibrations of an aircraft occurring as a result of squalls and buffeting according to claim 1 or 2, **characterized in that** the pitch rates determined by the inertial sensor system (21) are used to generate control flap movements.

4. Method of compensating for structural vibrations of an aircraft occurring as a result of squalls and buffeting according to claim 1, 2 or 3, **characterized in that** the roll rates determined by the inertial sensor system (21) are used to generate control flap movements.

5. Device for compensating for structural vibrations of a flying aircraft occurring as a result of squalls and buffeting,
- comprising an inertial sensor system (21) for determining at least one rotation rate (24, 26, 27) as a measured value (16) for structural vibrations that occur,
- comprising a flight control system (1) functionally connected to the inertial sensor system (21),
- comprising actuators (12, 14, 16) for moving control surfaces of the aircraft as a result of commands of the flight control system (1),
**characterized in that**
the at least one rotation rate (24, 26, 27) is routed to the flight control system (1) and the flight control system (1) has functions that generate corresponding actuating signals (11, 13, 15) for the respective actuators (12, 14, 16) on the basis of the device for compensating structural vibrations of a flying aircraft as a result of squalls and buffeting in order to minimize the phases and amplitudes of the excited vibrations by phase-related and amplitude-related control flap movements.

6. Device for compensating for structural vibrations of a flying aircraft occurring as a result of squalls and buffeting according to claim 5, **characterized in that** yaw rates determined by the inertial sensor system (21) are used for the at least one rotation rate (24, 26, 27).

7. Device for compensating for structural vibrations of a flying aircraft occurring as a result of squalls and buffeting according to claim 5 or 6, **characterized in that** pitch rates determined by the inertial sensor system (21) are used for the at least one rotation rate (24, 26, 27).

8. Device for compensating for structural vibrations of a flying aircraft occurring as a result of squalls and buffeting according to one of claims 5, 6 or 7, **characterized in that** roll rates determined by the inertial sensor system (21) are used for the at least one rotation rate.

9. Device for compensating for structural vibrations of a flying aircraft occurring as a result of squalls and buffeting according to any of the preceding patent claims, **characterized in that** the functions of the inertial sensor system (21) are functionally integrated with functions of the flight control system in a data processing apparatus.

10. Device for compensating for structural vibrations of a flying aircraft occurring as a result of squalls and buffeting according to any one of patent claims 1 to 8, **characterized in that** the functions of the inertial sensor system (21) are disposed separately from the functions of the flight control system in a data processing apparatus.

11. Device for compensating for structural vibrations of a flying aircraft occurring as a result of squalls and buffeting according to any one of the preceding patent claims, **characterized in that** the flight control system (1) and/or the inertial sensor system (21) comprises or comprise a plurality of redundant components that are mutually interchangeable in order to detect and to identify the occurrence of errors and to ensure suitable reconfiguration measures are taken to maintain the entire flight control functions.

12. Device for compensating for structural vibrations of a flying aircraft occurring as a result of squalls and buffeting according to any one of the preceding patent claims, **characterized in that** the flight control system (1) and/or the inertial sensor system (21) comprises or comprise similar redundant components.

13. Device for compensating for structural vibrations of a flying aircraft occurring as a result of squalls and buffeting according to any one of the preceding patent claims, **characterized in that** the flight control system and/or the inertial sensor system (21) comprises or comprise dissimilar redundant components.

## Revendications

1. Procédé pour compenser des vibrations de structure d'un aéronef en vol dues à des rafales et à des trépidations, avec un système de régulation de vol (1), avec des servomoteurs (12, 14, 16) pour mettre en mouvement des gouvernes et avec un système de capteurs d'inertie (21), comprenant les étapes suivantes :
- saisie par mesure (16) des oscillations de la structure à l'aide d'au moins un taux de rotation (24, 26, 27) déterminé dans le système de capteurs d'inertie (21),
- transmission de l'au moins un taux de rotation (24, 26, 27) au système de régulation de vol (1) ;
- production de mouvements de volets en analogie de phase et d'amplitude par la mise à disposition de signaux d'asservissement correspondants (11, 13, 15) pour les servomoteurs respectifs (12, 14, 16) afin de minimiser les phases et les amplitudes des oscillations engendrées.

2. Procédé pour compenser des vibrations de structure d'un aéronef dues à des rafales et à des trépidations selon la revendication 1, **caractérisé en ce que** les taux de lacet déterminés par le système de capteurs d'inertie (21) sont utilisés pour produire les mouvements des gouvernes.

3. Procédé pour compenser des vibrations de structure d'un aéronef dues à des rafales et à des trépidations selon la revendication 1 ou 2, **caractérisé en ce que** les taux de tangage déterminés par le système de capteurs d'inertie (21) sont utilisés pour produire les mouvements des gouvernes.

4. Procédé pour compenser des vibrations de structure d'un aéronef dues à des rafales et à des trépidations selon la revendication 1, 2 ou 3, **caractérisé en ce que** les taux de roulis déterminés par le système de capteurs d'inertie (21) sont utilisés pour produire les mouvements des gouvernes.

5. Dispositif pour compenser des vibrations de structure d'un aéronef en vol dues à des rafales et à des trépidations
- avec un système de capteurs d'inertie (21) pour déterminer au moins un taux de rotation (24, 26, 27) en tant que valeur de mesure (16) pour des oscillations de structure qui se produisent,
- avec un système de régulation de vol (1) qui est en relation fonctionnelle avec le système de capteurs d'inertie (21),
- avec des servomoteurs (12, 14, 16) pour mettre en mouvement des gouvernes de l'aéronef sur la base des ordres donnés par le système de régulation de vol (1),
**caractérise en ce que**
l'au moins un taux de rotation (24, 26, 27) est transmis au système de régulation de vol (1) et **en ce que** le système de régulation de vol (1) comprend des fonctions par lesquelles, du fait du dispositif pour compenser des vibrations de structure d'un aéronef en vol dues à des rafales et des trépidations, des signaux d'asservissement correspondants (11, 13, 15) sont transmis aux servomoteurs respectifs (12, 14, 16) pour minimiser, par des mouvements de volets en analogie de phase et d'amplitude, les phases et les amplitudes des oscillations engendrées.

6. Dispositif pour compenser des vibrations de structure d'un aéronef en vol dues à des rafales et à des trépidations selon la revendication 5, **caractérisé en ce que** des taux de lacet déterminés par le système de capteurs d'inertie (21) sont utilisés pour l'au moins un taux de rotation (24, 26, 27).

7. Dispositif pour compenser des vibrations de structure d'un aéronef en vol dues à des rafales et à des trépidations selon la revendication 5 ou 6, **caractérisé en ce que** des taux de tangage déterminés par le système de capteurs d'inertie (21) sont utilisés pour l'au moins un taux de rotation (24, 26, 27).

8. Dispositif pour compenser des vibrations de structure d'un aéronef en vol dues à des rafales et à des trépidations selon la revendication 5, 6 ou 7, **caractérisé en ce que** des taux de roulis déterminés par le système de capteurs d'inertie (21) sont utilisés pour l'au moins un taux de rotation (24, 26, 27).

9. Dispositif pour compenser des vibrations de structure d'un aéronef en vol dues à des rafales et à des trépidations selon l'une quelconque des revendications précédentes, **caractérisé en ce que** les fonctions du système de capteurs d'inertie (21) font l'objet d'une intégration fonctionnelle avec des fonctions du système de régulation de vol dans un dispositif de traitement de données.

10. Dispositif pour compenser des vibrations de structure d'un aéronef en vol dues à des rafales et à des trépidations selon l'une quelconque des revendications 1 à 8, **caractérisé en ce que** les fonctions du système de capteurs d'inertie (21) sont disposées de manière disloquée par rapport aux fonctions du système de régulation de vol dans un dispositif de traitement de données.

11. Dispositif pour compenser des vibrations de structure d'un aéronef en vol dues à des rafales et à des trépidations selon l'une quelconque des revendications précédentes, **caractérisé en ce que** le système de régulation de vol (1) et/ou le système de capteurs d'inertie (21) comprend(comprennent) plusieurs composants redondants, qui sont à leur tour en échange réciproque pour reconnaître et pour identifier l'apparition de défauts et pour mettre à disposition des mesures de reconfiguration appropriées afin d'assurer le maintien de l'ensemble des fonctions d'asservissement du vol.

12. Dispositif pour compenser des vibrations de structure d'un aéronef en vol dues à des rafales et à des trépidations selon l'une quelconque des revendications précédentes, **caractérisé en ce que** le système de régulation de vol (1) et/ou le système de capteurs d'inertie (21) comprend(comprennent) des composants similaires redondants.

13. Dispositif pour compenser des vibrations de structure d'un aéronef en vol dues à des rafales et à des trépidations selon l'une quelconque des revendications précédentes, **caractérisé en ce que** le système de régulation de vol (1) et/ou le système de capteurs d'inertie (21) comprend(comprennent) des composants dissimilaires redondants.
